# EUROPEAN PATENT APPLICATION

(11) **EP 2 639 027 A1**
(43) Date of publication of application: **18.09.2013**
(21) Application number: 13396004.7
(22) Date of filing: 15.03.2013
(51) Int. Cl.: B27M 3/00, E04C 3/12, E04H 12/22

(54) **An elongated construction made of wood**

(30) Priority: 16.03.2012 FI 20120060 U
(71) Applicant: Tehomet Oy, 51200 Kangasniemi (FI)
(72) Inventor: Pesari, Esa, 82380 Tolosenmäki (FI)
(74) Representative: Nieminen, Taisto Tapani

(57) **Abstract**

At least partly of wood made elongated lighting column, fixture or beam construction, a body blank (2, 6, 10, 14, 16, 19, 22, 25) of which comprises many side by side locating wood elements (11, 15, 17, 26) or planks (1) which have been glued to each other forming an uniform full up or lengthened body blank (2, 6, 10, 14, 16, 19, 22, 25), from which blanks the desired elongated construction is formed or from which blanks other elongated construction having desired profile can be machined. The mentioned side by side mounted wood elements or planks are pressure impregnated by means of a wood protection medium containing water glass and after that said elements are glued to each other forming of body blanks (2, 6, 10, 14, 16, 19, 22, 25) for said elongated construction.

## Description

The invention relates to at least partly of wood made elongated lighting column, fixture or beam construction, a body blank of which comprises many side by side locating wood elements or planks which have been glued to each other forming an uniform full up or lengthened body blank, from which blanks the elongated construction is formed or other elongated construction having desired profile can be machined.

Earlier is known body blanks for wooden columns according to the above preamble from published application US 2002182361 A1, where wooden parts which are forming an underground portion for the body blank are of different material than wooden parts which are intended to mount above the ground surface. The wooden construction is not impregnated in this solution but durability and cheaper construction is tried to obtain by using different wood species, so that cheaper wood is used in the column portion which is in less charged condition and only in charged condition, like underground portion more durable and more expensive wood is used.

By solution according to the invention better durability for both the portion mounted above the ground and the underground portion is obtained for the wooden column, fixture or beam construction formed of side by side to each other glued wood elements. Characteristics for this invention is that side by side mounted wood elements or blanks are pressure impregnated by means of a wood protection medium containing water glass and after that said elements are glued to each other to form body blanks for mentioned elongated construction.

As advantage for this invention is that massive wood construction becomes impregnated of its inner parts essentially better, when its structural components are separately impregnated as smaller wood parts before gluing together compared with impregnation of the construction as a ready one, wherein for obtaining corresponding result a multiple penetration for the impregnation medium is requested in view of the invented impregnation system. Impregnation and possible heat treatment with it must be preferably done first thinking gluing possibilities, because heat treatment and also impregnation of glued construction are weakening said construction and even may open glued joints. Water glass used in impregnation also improves fire-proof property of the construction.

In the following the invention is detailed described by referring to the accompanying drawings where
Fig. 1 presents a wood element, by using which elements a body blank of a lighting column is formed.
Fig. 2 presents wood elements glued together and forming a body blank.
Figures 3 - 5 present different kind of lighting column solutions.
Fig. 6 presents a lighting column construction.
Fig. 7 presents a seat construction made of a body blank according to the invention.
Fig. 8 presents a body blank of the fig. 7 as separate parts and glued.
Fig. 9 presents a column construction assembled of wood elements.
Fig. 10 presents another seat construction in different stages.
Fig. 11 presents a body blank of figure 10 as separate parts and glued.
Fig. 12 presents a roof construction having wooden parts according to the invention.
Fig. 13 present wooden constructions of the roof in the figure 12.

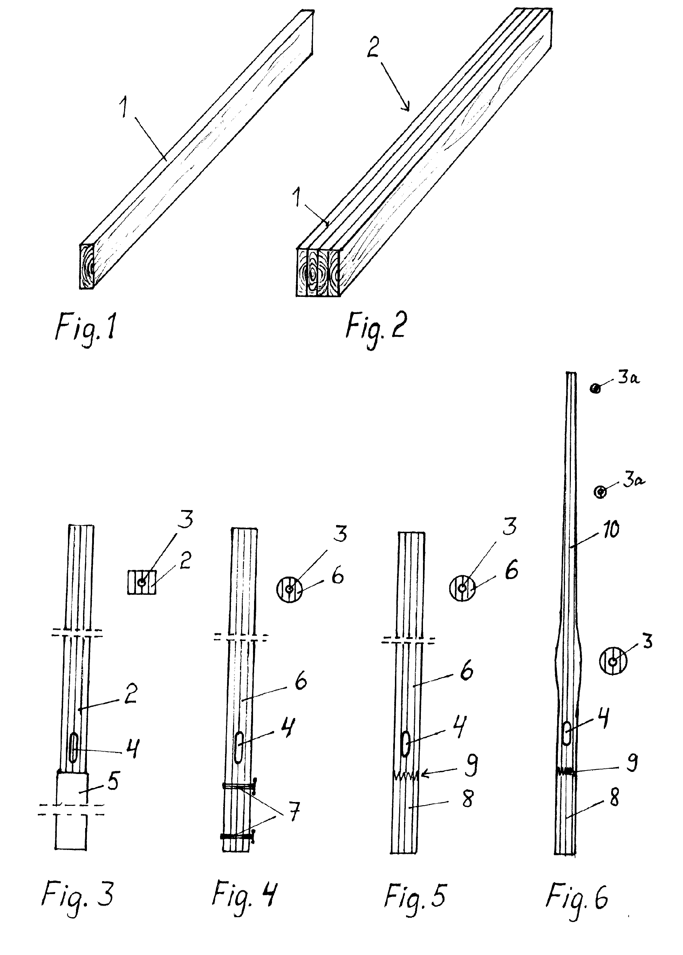

In figure 1 there is a wood element or plank 1, which is according to the invention treated so, that its durability against for example weathers, pests or location underground or against all these is improved. This plank 1 is impregnated, like pressure impregnated, when the plank has been elected as structure part for column blank 2. The pressure impregnation of the plank 1 is preferably done according to a manner described in the publication WO 2009/087262, which impregnation comprises blue staining of the wood element, hot drying/heat treatment and pressure impregnation by means of wood protection medium containing water glass. When these treatments are made for the plank, handling becomes easier, faster and penetration of the impregnation medium inside wood better, when the thickness of the plank is in this treatment only for example 20 - 25 % of the thickness of the final product.

In figure 2 a body blank 2 of a lighting column is presented, said blank being formed by gluing wood elements presented in the figure 1 four pieces side by side. By machining the blanks 2 like this the desired kind of lighting columns are made. The side by side locating planks 1 have been heat treated before or after the pressure impregnation. The impregnation of the wood material is very even of its quality, because the blank 2 is formed of separately impregnated planks. Through the body blank 2 is next drilled, among others, in the direction of the column a long hole 3 from the column base to a top for mounting an electric cable from said base to said top.

Figure 3 shows a lighting column made of a body blank 2, which has been left in the four cornered form of the blank 2. A metallic base part 5 has been coupled to it, wherein said part 5 is intended to sink into the ground. In the metallic base part 5 placed blank 2 is planed, dyed and lacquered. The base part 5 can be remarkable longer than the portion which has been sunk into the ground and thus extended above the ground surface even 1 - 2 meters. The blank 2 length which is placed inside the base part 5 is about 2,5 times the diameter of the blank 2. There is in the lower end of the base part 5 preferably a flange, which is increasing the bearing capacity of the base part and is preventing the column to get up. A connection door 4 for electric connections has been made in the side part of the blank 2. If the metallic base part 5 extends enough above the ground surface it is advantageous to place said door 4 to this portion. Due to the treating of blank elements according to the invention the column construction will have long lifetime.

In the figure 4 the underground portion of the lighting column is by the same way treated wood material with the portion 6 being placed above the ground. Glued joint is secured in the underground portion by means of band structures 7 placed round the blank. Instead of band structures 7 also through joints lead bolts can be used in a known way.

In figure 5 there is presented a structure, where the underground portion 8 has been made of different wood species or by different way treated wood materials and by means of finger joint glued to the portion 6 locating above the ground. In this case the portion 6 above the ground has been machined to be round.

In the figure 6 there is of its body specially shaped lighting column, wherein for example started from the body blank 2 there is by machining shaped the portion 10 locating above the ground by leaving a thicker portion in said portion and for making the column strongly narrower towards the top, section views 3a. The advantage of the invention becomes this particularly out, because in spite of large machining there is on the column surface enough impregnation medium in every point, because the starting materials i.e. wood elements 1 are due to their shapes through-impregnated enough and containing water glass according to the invention. Water glass has an effect for improving preservation of wood as well as effect to retard burning of wood.

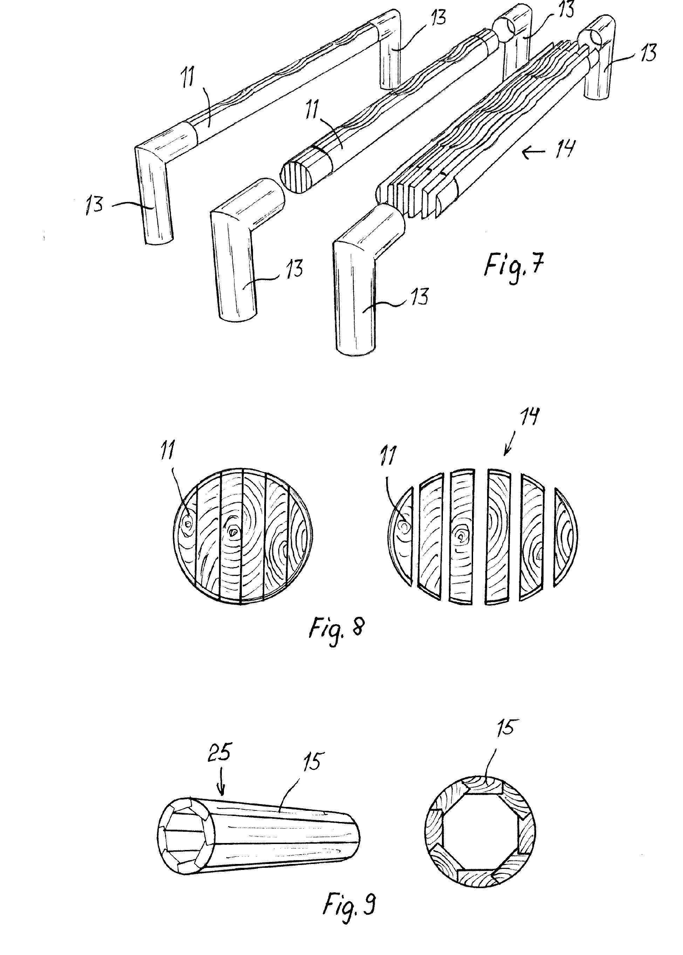

Figures 7 and 8 present of side by side locating according to the invention treated planks 11 by gluing assembled wooden construction 14, from which a horizontal directed seat has been designed.

Figure 9 presents an example of a hollow column construction 25 which is formed of wood elements 15 treated according to the invention and glued to each other.

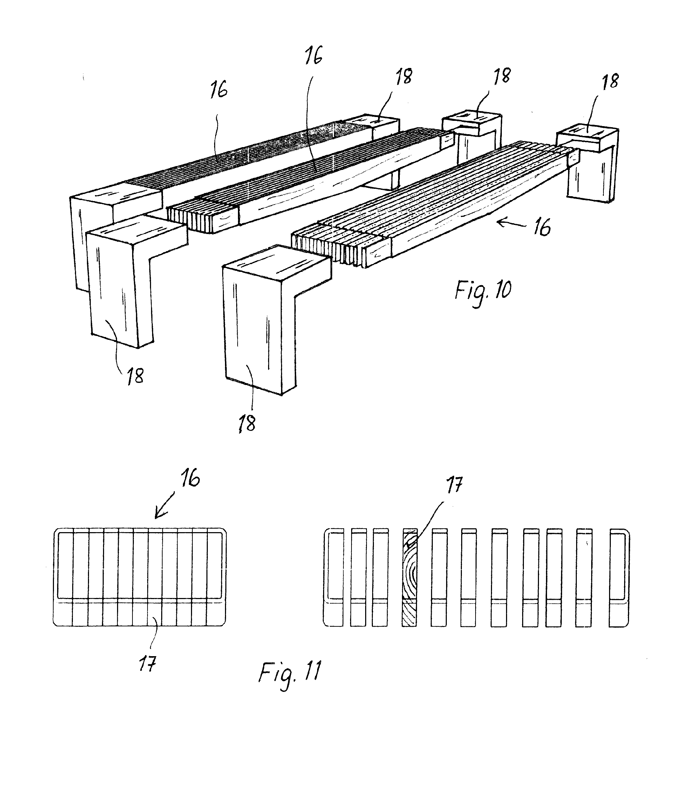

Figures 10 and 11 present another seat, the seat portion 16 of which has been formed of side by side locating according to the invention treated planks 17. Also in this case metallic end pieces 18 have been coupled to the ends of the seat.

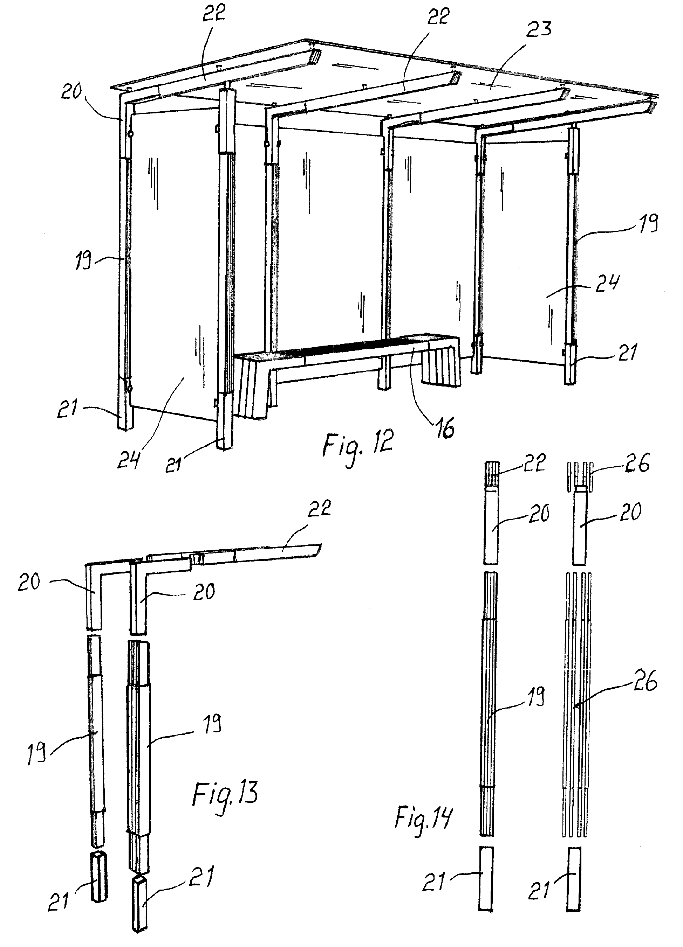

Figures 12, 13 and 14 present a roof, the bearing parts of which at least partly beams 19, 22 made of according to the invention have been used. The roof construction comprises wall elements 23 and a roof 23 and a seat, said seat having wooden part 16 according to the figure 10.

Although wooden constructions according to the invention have been described for coupling to the metallic parts these can also been coupled to plastic and concrete parts.

## Claims

1. At least partly of wood made elongated lighting column, fixture or beam construction, a body blank (2, 6, 10, 14, 16, 19, 22, 25) of which comprises many side by side locating wood elements (11, 15, 17, 26) or planks (1) which have been glued to each other forming an uniform full up or lengthened body blank (2, 6, 10, 14, 16, 19, 22, 25), from which blanks the desired elongated construction is formed or from which blanks other elongated construction having desired profile can be machined, **characterized in that** mentioned side by side mounted wood elements or planks (1) are pressure impregnated by means of a wood protection medium containing water glass and after that said elements are glued to each other forming of body blanks (2, 6, 10, 14, 16, 19, 22, 25) for said elongated construction.

2. An elongated construction according to claim 1, **characterized in that** side by side located wood elements, (11, 15, 17, 26) or planks (1) are heat treated before or after pressure impregnation.

3. An elongated construction according to claim 1, **characterized in that** at least the portion (8) of the body blank (2) located underground is protected by means of a metallic base part (5).

4. An elongated construction according to claim 1, **characterized in that** a metallic extension part (5, 18, 13, 20, 21) is coupled to the body blank (2, 14, 16, 19, 22, 25).

5. An elongated construction according to claim 4, **characterized in that** the extension parts portion (8) having hollow construction, inside which parts one end or both ends of the body blank are placed.
